# EUROPÄISCHE PATENTSCHRIFT

(11) **EP 2 613 680 B1**
(45) Veröffentlichungstag und Bekanntmachung des Hinweises auf die Patenterteilung: **29.04.2015**
(21) Anmeldenummer: 11754375.1
(22) Anmeldetag: 06.09.2011
(51) Int. Cl.: A47J 43/08, A47J 43/044

(54) **ELEKTROMOTORISCH BETRIEBENES HAUSHALTSGERÄT UND STEUERVERFAHREN**
ELECTROMOTIVELY OPERATED HOUSEHOLD APPLIANCE AND CONTROL METHOD
APPAREIL MÉNAGER À ENTRAÎNEMENT ÉLECTROMOTORISÉ ET PROCÉDÉ DE COMMANDE

(30) Priorität: 09.09.2010 DE 102010040497; 09.09.2010 DE 102010040496
(43) Veröffentlichungstag der Anmeldung: 17.07.2013
(73) Patentinhaber: BSH Hausgeräte GmbH, 81739 München (DE)
(72) Erfinder: LIEBL, Andreas, 93128 Regenstauf (DE)
(86) Internationale Anmeldenummer: PCT/EP2011/065373
(87) Internationale Veröffentlichungsnummer: WO 2012/032033

(56) Entgegenhaltungen:
- FR-A1- 2 864 762
- US-A- 2 241 528
- US-A- 3 582 744

## Beschreibung

### Hintergrund der Erfindung

Die Erfindung betrifft ein Haushaltsgerät mit mindestens einem rotatorisch und/oder translatorisch bewegbarem Werkzeug und einem elektromotorischen Antrieb, sowie ein Verfahren zum Betreiben eines Haushaltsgeräts mit mindestens einem elektromotorisch antreibbaren Werkzeug.

### Stand der Technik

Ein als Stabmixer ausgebildetes Haushaltsgerät der eingangs genannten Art wird in dem Gebrauchsmuster DE 89 03 799 U1 offenbart. Das Rührgerät weist einen zylindrisch geformten, üblicherweise aus Kunststoff spritzgegossenen Handgriff auf, aus welchem koaxial ein Wellenschaft auskragt. Der Wellenschaft ist an seinem freien Ende mit einem glockenförmigen, vom Wellenschaft wegweisend offenen Fußteil ausgestattet, in welches ein Werkzeug zur rührenden oder schneidenden Bearbeitung von Behandlungsgut, beispielsweise Teig, Gemüse oder dergleichen, einsetzbar ist. Das Werkzeug wird bei Bedarf durch eine im Wellenschaft angeordnete Antriebswelle in Drehung versetzt. Der Wellenschaft ist seinerseits mit einer elektromotorischen Antriebseinrichtung verbunden.

Um Schäden am elektromotorischen Antrieb zu verhindern, insbesondere infolge thermischer Überlastung, werden derartige Stabmixer nur mit einer Leistung betrieben, welche die zulässige Dauerlast nicht übersteigt. Diese Leistung kann jedoch beim Bearbeiten von sprödem und hartem Gut unzureichend sein. Derartiges Bearbeitungsgut, beispielsweise Eiswürfel zur Herstellung von "Crushed Ice", Schokolade oder gefrorenes Obst, verlangt kurzfristig ein sehr hohes Bearbeitungsmoment. Nachdem das Bearbeitungsgut eine erste Zerkleinerung erfahren hat, nimmt der Leistungsbedarf jedoch erheblich ab. Der vorbekannte Stabmixer kann für die Bearbeitung derartigen Guts daher weniger gut geeignet sein. Bei Verwendung eines verstärken elektromotorischen Antriebs könnte dieser für den normalen Betrieb überdimensioniert sein und würde Gewicht und Kosten des Haushaltsgeräts in ungewünschter Weise erhöhen.

In der Gebrauchsmusterschrift DE 201 19 285 U1 wird ein Gerät zum Mischen, Mixen oder Zerkleinern unter Verwendung rotierender Werkzeuge beschrieben, welches insbesondere zur Bearbeitung von Eiswürfeln, gefrorenen Früchten oder dergleichen vorgesehen ist. Um das Bearbeitungsergebnis zu verbessern, wird in dieser Schrift vorgeschlagen, die Drehrichtung der Werkzeuge mindestens einmal zu verändern.

Hierzu sind entweder ein elektromotorischer Antrieb erforderlich, welcher von einer Drehrichtung auf eine gegenläufige Drehrichtung umschaltbar ist, oder es muss im Kraftfluss zwischen elektromotorischem Antrieb und dem Werkzeug ein Getriebe angeordnete werden, durch welches die Drehrichtung des Werkzeugs veränderbar ist. Ferner müssen auch die Werkzeuge für eine Bearbeitung in beiden Drehrichtungen geeignet sein. Der konstruktive Aufwand kann somit erheblich sein. Ferner ist der Erfolg dieses Vorgehens nicht notwendigerweise gesichert, da die Leistungsabgabe des elektromotorischen Antriebs weiterhin beschränkt ist.

Das Gebrauchsmuster DE 297 19 596 U1 betrifft ein tragbares elektrisches Küchengerät mit einem elektromotorischen Antrieb, der mindestens eine Arbeitswerkzeug antreibt, beispielsweise ein elektrisches Messer, einen Stabmixer oder ein Handrührgerät. Um dieses Küchengerät den Anforderungen entsprechend besonders genau einzustellen, ist am Küchengerät ein Drucksensor vorgesehen, der ein dem vom Benutzer ausgeübten Druck proportionales Ausgangssignal liefert. Die Geschwindigkeit des elektromotorischen Antriebs des Küchengeräts wird in Abhängigkeit vom Ausgangssignal verändert.

Durch eine solche Ausbildung kann ein besonders sanftes Anfahren der Bearbeitungswerkzeuge bewirkt werden, beispielsweise beim Einleiten eines Schneidvorgangs mit einem elektrischen Messer. Dieses Vorgehen kann jedoch ungeeignet sein, dem Leistungsbedarf bei der Bearbeitung von hartem oder sprödem Gut gerecht zu werden.

Aus der Patentschrift DE 44 22 086 C1 ist eine Küchenmaschine bekannt, bei welcher die einzustellende Drehzahl, der zu wählende Drehzahlbereich oder die zulässige Höchstdrehzahl in Abhängigkeit von den verwendeten Werkzeugen automatisch eingestellt wird. Die Werkzeuge sind zu diesem Zweck mit einer Codierung versehen, die von der Küchenmaschine erkannt wird. Die Motordrehzahl wird dann elektronisch dem installierten Küchenwerkzeug angepasst.

Bei der Bearbeitung von hartem oder sprödem Gut führt dies nur zu einer Verbesserung, wenn vorübergehend spezielle Anlaufwerkzeuge verwendet werden, die für die Bearbeitung zum gewünschten Endergebnis wieder gewechselt werden. Dies kann unpraktisch und in der Praxis schwer durchsetzbar sein.

Es ist ferner bekannt, bei Haushaltsgeräten der aus DE 89 03 799 U1 bekannten Art als Antriebseinrichtung im Handgriff angeordnete elektronische oder Zweistufenmotoren vorzusehen, deren Drehzahl sich bei Belastung, insbesondere bei der Bearbeitung schwerer Teige oder dergleichen, verlangsamt. Alternativ wird vorgeschlagen, durch den Handgriff eine flexible Welle hindurchzuführen, die mit einem außerhalb des Handgriffs befindlichen, regelbaren und luftgekühlten Elektromotor in Drehverbindung steht. Durch diese räumliche Trennung von Haushaltsgerät und elektromotorischem Antrieb soll auch eine langandauernde Bearbeitung von heißem oder kochendem Gut, beispielsweise bei der Marmeladenzubereitung, ermöglicht werden.

Ein anderes Haushaltsgerät in Form einer Küchenmaschine ist aus der deutschen Patentschrift DE 44 22 086 C1 bekannt. Das dort beschriebene Gerät ist mit einer Einrichtung zur Erfassung der Drehzahl des Küchenwerkzeugs sowie zur Regelung der Drehzahl auf einen eingestellten Sollwert ausgestattet. Hierdurch wird eine einfache Drehzahlregelung bereitgestellt, welche die Drehzahl des Küchenwerkzeugs unabhängig von der Last konstant hält.

In der Druckschrift DE 603 17 091 T2 wird ein weiteres elektromotorisch angetriebenes Gerät zur Verarbeitung von Nahrungsmitteln offenbart, bei welchem eine Auswertung des Rückkopplungssignals eines Stellglieds durch eine Regelungseinheit vorgesehen ist. Die Regelungseinheit kann den Strom, welcher dem Motor zur Verfügung gestellt wird, basierend auf dem Rückkopplungssignal anpassen.

Von derartigen Haushaltsgeräten können bei unsachgemäßem Gebrauch gegebenenfalls Gefahren ausgehen. Es kann bei missbräuchlicher. Handhabung nicht ausgeschlossen werden, dass der Benutzer in Kontakt mit dem außerhalb des Behandlungsguts nur von oben durch das Fußteil verdeckten Werkzeug gerät. Darüber hinaus kann insbesondere beim Bearbeiten heißen, flüssigen Behandlungsguts beim Anlaufen des Geräts gegebenenfalls ein Herausspritzen aus dem Aufnahmegemäß auftreten.

Aus dem Gebrauchsmuster DE 93 01 408 U1 ist bekannt, ein Handrührgerät mit einem aus Klarsichtfolie bestehenden Spritzschutz auszustatten, welcher in der Mitte Ausnehmungen für die Durchführung der Rührwerkzeuge aufweist und randseitig auf dem Aufnahmegefäß aufliegt. Eine ausreichende Luftzufuhr soll durch Luftlöcher in der Klarsichtfolie gewährleistet werden. Eine derartige Vorrichtung kann hinsichtlich ihrer Handhabung unkomfortabel sein und sie kann auch ein Berühren der Werkzeuge bei unbeabsichtigten Einschalten des Geräts vor dem Auflegen des Spritzschutzes nicht verhindern.

In der Patentschrift DE 100 33 032 C1 wird ein das Werkzeug abschirmendes Fußteil für einen Stabmixer beschrieben, das an seinem unteren Rand wellenartig ausgebildet und an seinen Mantelflächen mit Ausströmöffnungen ausgestattet ist. Durch diese Ausbildung sollen unbeabsichtigtes Spritzen durch aus dem Aufnahmegefäß herausgeschleudertes Behandlungsgut sowie ein Festsaugen des Stabmixers am Boden des Behandlungsgefäßes vermieden werden. Ein Kontakt mit dem sich außerhalb des Behandlungsguts befindlichen Werkzeugs bei versehentlichem Betätigen des Stabmixers kann diese Ausbildung ebenfalls nicht verhindern.

In der Offenlegungsschrift DE 2 904 159 A wird ein elektrisches Handgerät zur selektiven Benutzung von Rühr- oder Schneidwerkzeugen offenbart, bei welchem durch eine Werkzeugabtastung eine Schaltung auf Dauerbetrieb ausgeschlossen ist, sobald ein Schneidwerkzeug in das Handgerät eingesetzt ist. Durch diesen Sicherheitsmechanismus kann unter Umständen die Zeitdauer verringert werden, in welcher der Benutzer unbeabsichtigt mit dem Schneidwerkzeug in Berührung gerät.

Aus dem Gebrauchsmuster DE 83 22 822 U1 ist ferner bekannt, die Sicherheit elektromotorisch betriebener Haushaltsgeräte durch einen Ein/Aus-Schalter mit einer zusätzlichen Einschaltsperre zu verbessern, welche vor dem Einschalten des Geräts gelöst werden muss, Hierdurch wird ein Einschalten des Geräts durch Kinder oder ein versehentliches Einschalten, beispielsweise beim Reinigen des Geräts, erschwert oder sogar ganz verhindert.

In der Offenlegungsschrift DE 41 34 025 A1 wird ein fahrbares Mischgerät mit einem schwenkbar gelagerten, drehangetriebenen Rührer mit nach unten abragenden, stabförmig ausgebildeten Rührarmen beschrieben, welche vor Aufnahme des Rührvorgangs von oben in das im Aufnahmegefäß befindliche Mischgut eingeführt werden. Mittels zweier Sicherheitsschalter wird gewährleistet, dass ein Betätigen des Mischgeräts nur bei eingesetztem Aufnahmegefäß und eingeschwenktem Rührer möglich ist. Eine derartige Schaltung kann bei handgeführten Haushaltsgeräten jedoch schwer umsetzbar sein.

Die französische Patentschrift FR 2 864 762 A1 offenbart ein elektrisches Haushaltsgerät für die Zubereitung von Lebensmitteln, das über Mittel zum Steuern der Rotationsgeschwindigkeit eines Drehwerkzeugs verfügt. Das Gerät umfasst Mittel zum Erfassen des Belastungszustands oder des am Motor anstehenden Drehmoments sowie Steuermittel, die zum Schalten zwischen zwei Betriebsmodi dienen.

Die US-amerikanische Patentschrift 4,691,870 offenbart ein Haushaltsgerät, das eine Kontrolleinrichtung umfasst, die die Motorgeschwindigkeit automatisch stabilisiert wenn der Motor unter Last betrieben wird, auch wenn die auf den Motor wirkende Last leicht fluktuiert.

Die europäische Patentanmeldung EP 0 480 309 offenbart eine Lehre, die vorschlägt, den akustischen Lärm eines Lebensmittel verarbeitenden Geräts zu limitieren, indem die Motorgeschwindigkeit auf eine Maximalgeschwindigkeit begrenzt wird. Diese einer Geschwindigkeit ist jedoch nicht als Funktion der auf den Motor anliegenden Last vorgesehen.

Die japanische Schrift JP 11-225891 beschreibt einen Mixer, der automatisch anhält, wenn das bearbeitete Lebensmittel einen ausreichenden Grad der Zerkleinerung erreicht hat. Diese Vorrichtung umfasst demnach Mittel zur Erfassung des Bearbeitungszustands des zu bearbeitenden Guts.

Die US-amerikanische Patentschrift 2,241,528 offenbart eine Einrichtung zum Stabilisieren und Kontrollieren der Geschwindigkeit eines Motors für ein Haushaltsgerät. Die Drehgeschwindigkeit des Werkzeugs wird hierbei durch mechanische Bauteile gemessen.

Das US Patent 3,582,744 offenbart einen Kontrollschaltkreis für Gleichstrommotoren, die auch bei schwankender Netzspannung eine gleichmäßige Leistungsabgabe des Motors ermöglicht.

### Der Erfindung zugrundeliegende Aufgabe

Der Erfindung liegt die Aufgabe zugrunde, die Eignung eines gattungsgemäßen Haushaltsgeräts für die Bearbeitung von sprödem oder hartem Gut mit konstruktiv einfachen und leicht zu bedienenden Mitteln zu verbessern. Der Erfindung liegt darüber hinaus die Aufgabe zugrunde, ein gattungsgemäßes Haushaltsgerät hinsichtlich der Wahrscheinlichkeit von Verletzungen durch drehende Werkzeuge sowie in Bezug auf die Wahrscheinlichkeit des Herausspritzens von Behandlungsguts weiter zu verbessern.

### Erfindungsgemäße Lösung

Die der Erfindung zugrunde liegende Aufgabe wird nach einer Ausbildung der Erfindung bei einem gattungsgemäßen Haushaltsgerät dadurch gelöst, dass das Haushaltsgerät Steuerungsmittel zum vorübergehenden Betreiben des elektromotorischen Antriebs mit gegenüber der zulässigen Dauerlast erhöhten Leistung aufweist. Hinsichtlich des Verfahrens erfolgt die Lösung der Aufgabe dadurch, dass der elektromotorische Antriebs bei Auftreten eines vorgegebenen Ereignisses vorübergehend auf eine gegenüber der zulässigen Dauerlast erhöhte Leistung umgeschaltet wird, wobei insbesondere jeweils ein erhöhtes Bearbeitungsmoment erzeugt werden kann.

Es ist ein erreichbarer Vorteil der Erfindung, dass vorübergehend eine besonders hohe Leistung bereitgestellt wird, die zum Brechen von hartem oder sprödem Gut wie Eiswürfeln, gefrorenem Obst oder Schokolade ausreichend ist. Nachdem das Brechen erfolgt ist, nimmt der Leistungsbedarf wieder erheblich ab, so dass der elektromotorische Antrieb wieder mit oder unterhalb der zulässigen Dauerlast betrieben werden kann. Dies schließt nicht aus, dass auch die Drehzahl der Werkzeuge an den betreffenden Bearbeitungsfall angepasst werden kann. Durch eine nur vorübergehende Erhöhung der abgegebenen Leistung wird andererseits verhindert, dass der elektromotorische Antrieb Schaden nimmt.

Die Erfindung kann mit besonderem Vorteil bei Haushaltsgeräten mit rotierenden Werkzeugen zum Einsatz kommen, beispielsweise bei Stabmixern, Handrührgeräten oder Brotschneidemaschinen. Das Haushaltsgerät kann dabei einzelne oder mehrfach angeordnete Werkzeuge aufweisen. Eine erfolgreiche Anwendung ist jedoch grundsätzlich auch bei Haushaltsgeräten mit sich translatorisch bewegenden Werkzeugen, beispielsweise elektrischen Messern, vorstellbar.

Gemäß einer Ausführungsform der Erfindung weist das Haushaltsgerät Mittel zur Erfassung des Belastungszustands des Werkzeugs sowie eine Steuerungseinrichtung auf, die zur Veränderung der Leistung des elektromotorischen Antriebs in Abhängigkeit vom gemessenen Belastungszustand geeignet ist. Dabei ist die Steuerungseinrichtung bei quasi widerstandsfrei arbeitendem Werkzeug zur Einstellung einer geringen Leistungsabgabe und bei sprunghafter Änderung des Belastungszustands zur Einstellung einer erheblich höheren, zur Bearbeitung von Behandlungsgut ausreichenden Leistungsabgabe vorgesehen. Offenbart ist auch die Anwendung eines Verfahrens zum Betreiben eines Haushaltsgeräts mit elektromotorisch betriebenen Werkzeugen, bei welchem der die Drehzahl (n) des Werkzeugs oder die Stromaufnahme (Strom I) des elektromotorischen Antriebs erfasst wird. Erfindungsgemäß wird die Leistung des elektromotorischen Antriebs erhöht, sobald der gemessene Drehzahlgradient des Werkzeugs oder der Gradient der Stromaufnahme des elektromotorischen Antriebs einen vorgegebenen Schwellenwert erreicht. Hierbei wird bei quasi widerstandsfrei arbeitendem Werkzeug eine geringe Leistungsabgabe und bei sprunghafter Änderung des Belastungszustands eine erheblich höhere, zur Bearbeitung von Behandlungsgut ausreichende Leistungsabgabe eingestellt. Durch dieses Vorgehen ist eine besonders feinfühlige Umschaltung von geringer Leistung ("Hibernate Mode") auf hohe Leistung ("Power Mode") möglich. Dieses Vorgehen ermögliche gleichfalls eine besonders sensible Leistungsregelung.

Es ist ein erreichbarer Vorteil der Erfindung, dass der Benutzer bei einer missbräuchlichen Handhabung des Haushaltsgerät nur mit einem mit geringer Leistung ("Hibernate Mode") betriebenen Werkzeug in Berührung gelangen kann, so dass die Gefahr von Verletzungen deutlich verringert wird. Darüber hinaus wird die Wahrscheinlichkeit des Herausspritzens von Behandlungsgut aus dem Aufnahmegefäß deutlich verringert, sollte ein sich bereits bewegendes Werkzeug in das Behandlungsgut eingeführt werden. Dennoch steht nach dem Eintauchen des Werkzeugs in das Behandlungsgut zu dessen Bearbeitung eine ausreichende Leistung zur Verfügung ("Power Mode").

Die Erfindung kann mit besonderem Vorteil bei Haushaltsgeräten mit rotierenden Werkzeugen zum Einsatz kommen, beispielsweise bei Stabmixern, Handrührgeräten oder Brotschneidemaschinen. Das Haushaltsgerät kann dabei einzelne oder mehrfach angeordnete Werkzeuge aufweisen. Eine erfolgreiche Anwendung ist jedoch grundsätzlich auch bei Haushaltsgeräten mit sich translatorisch bewegenden Werkzeugen, beispielsweise elektrischen Messern, vorstellbar.

### Bevorzugte Ausgestaltung der Erfindung

Vorteilhafte Aus- oder Weiterbildungen, welche einzeln oder in Kombination miteinander eingesetzt werden können, sind Gegenstand der abhängigen Ansprüche.

Ein bevorzugtes Haushaltsgerät ist dadurch gekennzeichnet, dass die erhöhte Leistung in der Anlaufphase des elektrischen Antriebs erzeugbar ist. Hierdurch wird dem hohen Leistungsbedarf zu Beginn des Zerkleinerungsvorgangs bei hartem und sprödem Gut, beispielsweise dem erforderlichen hohen Anlaufmoment, in besonderer Weise Rechnung getragen.

Mit besonderem Vorteil sind die Steuerungsmittel zum vorübergehenden Betreiben des elektromotorischen Antriebs in einer gegenüber der zulässigen Dauerlast erhöhten Leistung durch Einschalten des Haushaltsgeräts aktivierbar. Damit ist sichergestellt, dass stets eine ausreichende Anlaufleistung bereitgestellt wird. Falls diese im betreffenden Belastungsfall, beispielsweise bei der Bearbeitung von weichem Gut wie Teig oder dergleichen, nicht unbedingt gefordert ist, so stellt sie doch zumindest keinen Nachteil dar. Die Bedienung des Haushaltsgeräts wird hierdurch besonders vereinfacht.

Ein weiteres bevorzugtes Haushaltsgerät zeichnet sich dadurch aus, dass die Steuerungsmittel zum vorübergehenden Betreiben des elektromotorischen Antriebs in einer gegenüber der zulässigen Dauerlast erhöhten Leistung durch Betätigen eines Schaltmittels des Haushaltsgeräts während des Betriebs aktivierbar sind. Hierdurch kann eine erhöhte Leistung auch dann vorübergehend abgerufen werden, wenn die Bearbeitung bereits mit oder unter der zulässigen Dauerlast erfolgt und durch ein besonderes Ereignis eine vorübergehende Leistungssteigerung erforderlich wird, beispielsweise bei einer Entstehung gefrorener Klumpen während der Herstellung von Speiseeis. Das Schaltmittel kann beispielsweise ein zu den übrigen Bedienelementen hinzugefügter Druckknopf oder eine zusätzliche Schaltstellung eines vorhandenen Bedienelements sein.

Mit besonderem Vorteil ist ferner vorgesehen, dass das Haushaltsgerät ein mit dem Steuerungsmittel wirkverbundenes Zeitglied aufweist, durch welches die Dauer des Betreiben des elektromotorischen Antriebs in einer gegenüber der zulässigen Dauerlast erhöhten Leistung zeitlich begrenzbar ist. Hierdurch wird auf besonders einfache Weise sichergestellt, dass der elektromotorische Antrieb durch die gesteigerte Leistungsabgabe nicht geschädigt wird.

Alternativ ist ein Haushaltsgerät bevorzugt, welches ein mit dem Steuerungsmittel wirkverbundenes Mittel zur Messung der verrichteten Arbeit und/oder des vom elektromotorischen Antrieb aufgenommene Stroms aufweist, durch welches die Dauer des Betreibens des elektromotorischen Antriebs in einer gegenüber der zulässigen Dauerlast erhöhten Leistung in Abhängigkeit von der verrichteten Arbeit und/oder einem Leistungsabfall begrenzbar ist. Die unter erhöhter Leistungsabgabe verrichtete Arbeit kann zur Bestimmung der thermischen Belastung des elektromotorischen Antriebs herangezogen werden, so dass durch ein rechtzeitiges Zurückschalten auf die zulässige Dauerlast ein Überhitzen desselben vermieden wird. Durch eine Messung der abgegebenen Leistung kann darüber hinaus der Zeitpunkt festgestellt werden, an welchem der Leistungsbedarf abnimmt und ein Zurückschalten des elektromotorischen Abtriebs auf die zulässige Dauerlast ohne Beeinträchtigung der weiteren Bearbeitung möglich ist.

Das erfindungsgemäße Haushaltsgerät ist weiterhin mit Vorteil mit Mitteln ausgestattet, welche zur Abgabe eines akustischen Signals in Abhängigkeit vom Leistungszustand des elektromotorischen Antriebs vorgesehen sind. Hierdurch wird der Benutzer darauf hingewiesen, dass das Gerät sich gerade in einem vorübergehenden Betriebszustand befindet, der zur Bearbeitung von hartem und sprödem Gut besonders geeignet ist, so dass sich der Benutzer auf diese Bearbeitung konzentrieren kann. Alternativ oder zusätzlich können Mittel zur Abgabe eines optischen Signals in Abhängigkeit vom Leistungszustand des elektromotorischen Antriebs vorgesehen werden. Hierdurch wird die Sicherheit des Haushaltsgeräts nochmals verbessert.

Ein bevorzugtes Verfahren zum Betreiben des Haushaltsgeräts zeichnet sich dadurch aus, dass der elektromotorische Antriebs bei Auftreten eines vorgegebenen Ereignisses vorübergehend auf eine gegenüber der zulässigen Dauerlast erhöhte Leistung umgeschaltet wird. Somit kann vorübergehend eine gegenüber der zulässigen Dauerlast erhöhte Leistung abgerufen werden, die zur Bearbeitung von Gut genutzt werden kann, dass sich während der Bearbeitung hinsichtlich seiner Leistungserfordernisse stark verändert und nur vorübergehend nach einem besonders hohen Antriebsmoment verlangt.

Mit besonderem Vorteil ist das vorgegebene Ereignis das Einschalten des Geräts, da gerade beim Zerkleinern von Eiswürfeln oder dergleichen der Leistungsbedarf nach dem ersten Brechen erheblich abnimmt. Die Bedienungsführung für das Haushaltsgerät ändert sich in diesem Fall für den Benutzer nicht.

Für den Fall, dass erst während der Bearbeitung mit oder unterhalb der zulässigen Dauerlast ein vorübergehender Anstieg des Leistungsbedarfs auftritt, ist bevorzugt vorgesehen, dass das vorgegebene Ereignis das Betätigen eines Schaltmittels des Haushaltsgeräts ist. Hierbei kann es sich um ein erneutes Betätigen des gleichen Schaltmittels oder um ein Betätigen eines weiteren Schaltmittels handeln. Der Benutzer kann somit vorübergehend eine erhöhte Leistung abrufen, falls dies während der Bearbeitung erforderlich werden sollte.

Es ist weiterhin bevorzugt, dass die Zeitdauer des Betreibens mit einer gegenüber der zulässigen Dauerlast erhöhten Leistung gemessen und der elektromotorische Antrieb bei Erreichen einer vorgegebenen, beispielsweise vorab empirisch bestimmten Zeitgrenze auf die zulässige Dauerlast umgeschaltet wird. Hierdurch wird auf besonders einfache Weise eine Überlastung des elektromotorischen Antriebs verhindert.

Alternativ kann mit Vorteil vorgesehen werden, dass die während des Betreibens mit einer gegenüber der zulässigen Dauerlast erhöhten Leistung verrichtete Arbeit und/oder der vom elektromotorischen Antrieb aufgenommene Strom gemessen werden und der elektromotorische Antrieb bei Erreichen einer vorgegebenen Arbeits- und/oder Leistungsgrenze auf die zulässige Dauerlast umgeschaltet wird. Auch durch dieses Vorgehen werden Schäden am elektromotorischen Antrieb vermieden. Ferner ist zur Entlastung des elektromotorischen Antriebs ein besonders frühzeitiges Zurückschalten auf die zulässige Dauerlast vorteilhaft.

Weiterhin ist bevorzugt, dass das Betreiben mit einer gegenüber der zulässigen Dauerlast erhöhten Leistung durch ein akustisches und/oder optisches Signal angezeigt wird, so dass sich der Benutzer der vorübergehend erhöhten Leistungsbereitschaft des Haushaltsgeräts bewusst wird und sein Handeln darauf einstellen kann.

Ein weiteres bevorzugtes Haushaltsgerät ist dadurch gekennzeichnet, dass die Mittel zur Erfassung des Belastungszustands des Werkzeugs zur Bestimmung der Drehzahl des Werkzeugs oder deren Änderung vorgesehen sind. Bei einem versehentlichen Kontakt mit dem unter geringer Leistung laufenden Werkzeug ist eine nennenswerte Änderung der Drehzahl nicht zu erwarten. Wird das Werkzeug jedoch in das Behandlungsgut eingeführt, fällt die Drehzahl des Werkzeugs infolge des sprunghaft erhöhten Widerstands deutlich ab. Die Erfassung der Drehzahl des Werkzeugs kann beispielsweise durch eine optische öder magnetische Markierung am Schaft der Antriebswelle oder des Elektromotors erfolgen, die beim Vorbeieilen an einem entsprechenden Sensor einen elektrischen Impuls erzeugt. Aus der zeitlichen Abfolge der Impulse kann dann die Drehzahl des Werkzeugs errechnet werden.

In besonders einfacher Weise kann die Erfassung des Belastungszustands des Werkzeugs jedoch dadurch erfolgen, dass Mittel zur Bestimmung der Stromaufnahme des elektromotorischen Antriebs oder deren Änderung vorgesehen sind. Die Messung der Stromaufnahme ist mit einfachen elektronischen Bauteilen realisierbar und gegebenenfalls bereits im Rahmen einer Überlastabschaltung im Haushaltsgerät vorgesehen.

Weiterhin ist bevorzugt vorgesehen, dass das Haushaltsgerät zusätzlich mit einer Sicherheits-Einschaltvorrichtung aus mindestens zwei Schaltelementen ausgestattet ist, die zum Einschalten des Haushaltsgeräts in eine Einschaltposition zu verstellen sind. Hierdurch werden nicht nur die möglichen Auswirkungen, sondern auch die Wahrscheinlichkeit eines ungewollten Einschaltens des Haushaltsgeräts verringert. Durch eine geeignete räumliche Anordnung der Handhaben der Schaltelemente oder der geforderten Schaltabfolge kann vermieden werden, dass ein ungewolltes Betätigen beider Schaltelemente erfolgt.

Dabei kann mit Vorteil vorgesehen werden, dass die Schaltelemente elektrisch mit dem elektromotorischen Antrieb wirkverbunden sind. Dies kann auf eine einfache Weise durch eine Reihenschaltung von Schaltelementen in der Stromzuführung zum elektromotorischen Antrieb erfolgen, so dass ein Stromfluss und eine Inbetriebnahme des Haushaltsgeräts nur dann erfolgen, wenn sich beide Schaltelemente gleichzeitig in Einschaltposition befinden.

Alternativ kann vorgesehen werden, dass die Schaltelement miteinander mechanisch und mindestens ein Schaltelement mit dem elektromotorischen Antrieb elektrisch wirkverbunden sind. Dies kann auf einfache Weise und raumsparende Weise durch eine einfache mechanische Verriegelung eines Schaltelements erfolgen, welches zur Unterbrechung der Stromzuführung zum elektromotorischen Antrieb geeignet ist.

Das erfindungsgemäße Haushaltsgerät ist weiterhin mit Vorteil mit Mitteln ausgestattet, welche zur Abgabe eines akustischen Signals in Abhängigkeit vom Belastungszustand des Werkzeugs vorgesehen sind. Hierdurch wird der Benutzer darauf hingewiesen, dass sich das Werkzeug des Haushaltsgerät bereits in Bewegung befindet, der Belastungszustand jedoch darauf schließen lässt, dass das Werkzeug noch nicht oder nicht vollständig in das Behandlungsgut eintaucht und somit ein ungewollte Kontakt des Benutzers mit dem Werkzeug nicht ausgeschlossen ist. Alternativ oder zusätzlich können Mittel zur Abgabe eines optischen Signals in Abhängigkeit vom Belastungszustand des Werkzeugs vorgesehen werden. Hierdurch wird die Sicherheit des Haushaltsgeräts nochmals verbessert.

Ein bevorzugtes Verfahren zum Betreiben des Haushaltsgeräts zeichnet sich dadurch aus, dass die Drehzahl des Werkzeugs erfasst und die Leistung des elektromotorischen Antriebs erhöht wird, sobald die Drehzahl des Werkzeugs einen vorgegebenen Schwellenwert erreicht und insbesondere unter eine Grenzdrehzahl abfällt. Ein derartiges Vorgehen ist regelungstechnisch besonders einfach umsetzbar.

Weiterhin ist bevorzugt, dass die Stromaufnahme des elektromotorischen Antriebs erfasst und die Leistung des elektromotorischen Antriebs erhöht wird, sobald die Stromaufnahme des elektromotorischen Antriebs einen vorgegebenen Schwellenwert erreicht. In diesem Fall kann die Erfassung des Belastungszustands durch gegebenenfalls bereits vorhandene elektronische Komponenten des Haushaltsgeräts und seines elektromotorischen Antriebs erfolgen.

Die genannten bevorzugten Verfahren werden in der Regel alternativ ausgewählt werden. Es ist jedoch grundsätzlich nicht ausgeschlossen, diese auch miteinander zu verknüpfen.

Besonders vorteilhaft ist ferner ein Verfahren zum Betreiben eines Haushaltsgerät mit elektromotorisch betriebenen Werkzeugen, bei welchem der Belastungszustand des Werkzeugs erfasst und die Leistung des elektromotorischen Antriebs verringert wird, sobald der gemessene Belastungszustand den vorgegebenen Schwellenwert verlässt. Hierdurch wird kommen die Vorzüge der Erfindung nicht nur vor den Eintauchen des Werkzeugs in das Behandlungsgut, sondern auch bei einem Herausziehen des sich noch bewegenden Werkzeugs aus dem Behandlungsguts zum Tragen.

### Kurzbeschreibung der Figuren

Die Erfindung wird im Folgenden anhand schematischer Zeichnungen an vier Ausführungsbeispielen mit weiteren Einzelheiten näher erläutert.

Es zeigen:
- Fig. 1:: den Verfahrensablauf an einem ersten erfindungsgemäßen Haushaltsgerät;
- Fig. 2:: das Vorgehen nach eine anderen Ausbildung der Erfindung;
- Fig. 3:: den Verfahrensablauf an einem weiteren erfindungsgemäßen Haushaltsgerät;
- Fig. 4:: das Vorgehen nach einer vierten Ausbildung der Erfindung.

### Ausführliche Beschreibung der Erfindung anhand von vier Ausführungsbeispielen

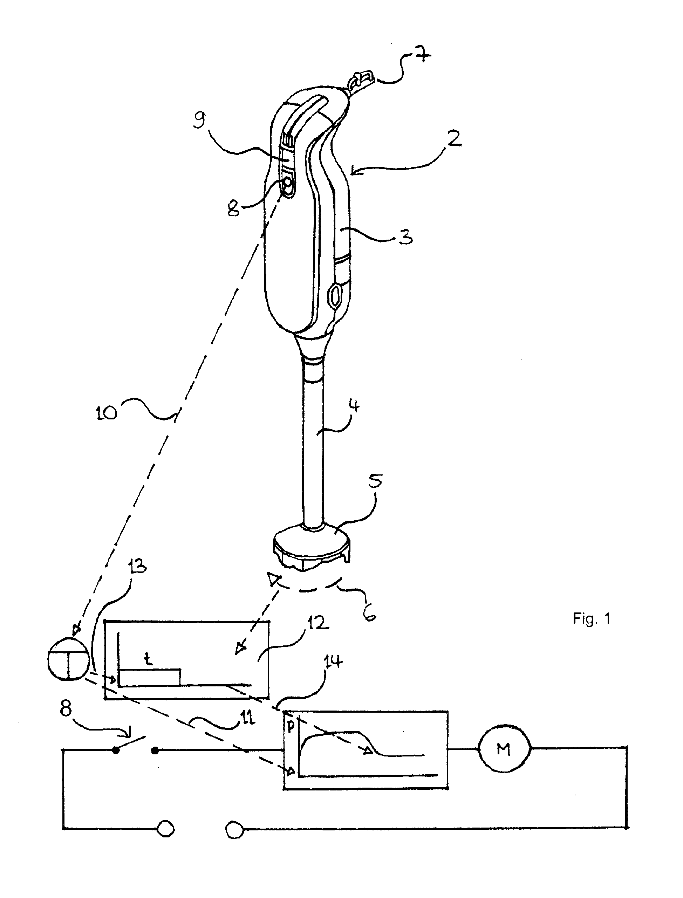

Das in Fig. 1 dargestellte Haushaltsgerät 1 ist als Stabmixer 2 ausgebildet und besteht aus einem Handgriff 3, einem von diesem abragenden Wellenschaft 4 und einem an diesen angeformten Fußteil 5. Handgriff 3, Wellenschaft 4 und Fußteil sind ein- oder mehrstückig als Spritzgießteile aus pflegeleichtem Kunststoff gefertigt. Das Fußteil 5 weist die Form einer nach unten offenen Glocke auf und nimmt ein rotierendes Rühr- oder Schneidwerkzeug auf (Pfeil 6), das drehfest auf das auskragende Ende einer durch den Wellenschaft 4 geführten Welle aufsetzbar ist. Das andere Ende der Welle ist mit einem elektromotorischen Antrieb M verbunden, der im Handgriff 3 angeordnet ist und über ein Netzkabel 7 an ein übliches 230V-Wechselstromnetz angeschlossen werden kann. Alternativ ist auch eine Stromversorgung durch einen im Handgriff 3 angeordneten Akkumulator möglich. Im Handgriff 3 befinden sich ferner ein erstes Schaltmittel 8 (Ein/Aus-Schalter), über welches das Haushaltsgerät 1 einschließlich seines elektromotorischen Antriebs M eingeschaltet werden kann. Weiterhin ist ein zweites Schaltmittel 9 vorgesehen, durch dessen Betätigen der Benutzer in der nachfolgend beschriebenen Weise Einfluss auf das Leistungsverhalten des elektromotorischen Antriebs nehmen kann.

Beim Einschalten des Haushaltsgeräts 1 durch Betätigen des ersten Schaltmittels 8 (Pfeil 10) wird die Startfunktion aktiviert. Die Leistung des elektromotorischen Antriebs wird daraufhin durch die Steuerungsmittel ("Power-Start-Elektronik PSE") des Haushaltsgeräts 1 ohne weiteres Zutun gegenüber der zulässigen Dauerlast erhöht eingestellt (Pfeil 11, siehe Diagramm: Leistung P über Zeit t), so dass zum initialen Brechen von sprödem oder hartem Bearbeitungsgut ein ausreichendes Anlaufmoment zur Verfügung steht ("Power Start"). Der Zustand der erhöhten Leistung des elektromotorischen Antriebs wird dem Benutzer durch ein optisches und akustisches, gegebenenfalls auch taktiles Signal mitgeteilt. Gleichzeitig wird ein Zeitglied 12 aktiviert (Pfeil 13), welches die Zeit vom Anlaufen des Werkzeugs an misst. Beim Erreichen einer zuvor herstellerseitig festgelegten Zeitschwelle wird die Leistung des elektromotorischen Antriebs M wieder auf einen Wert herabgesetzt, welcher als Dauerlast ("Blend Mode") geeignet ist (Pfeil 14).

Nachfolgend kann durch Betätigen des zweiten Schaltmittels 9 die erhöhte Leistung erneut vorübergehend angefordert werden, falls der Zustand des Bearbeitungsguts dies erfordert. Auch in diesem Fall wird die Dauer der Leistungserhöhung durch das Zeitglied 12 beschränkt, welches beim Betätigen des Schaltmittels 9 (PSE-Taste) erneut aktiviert wird.

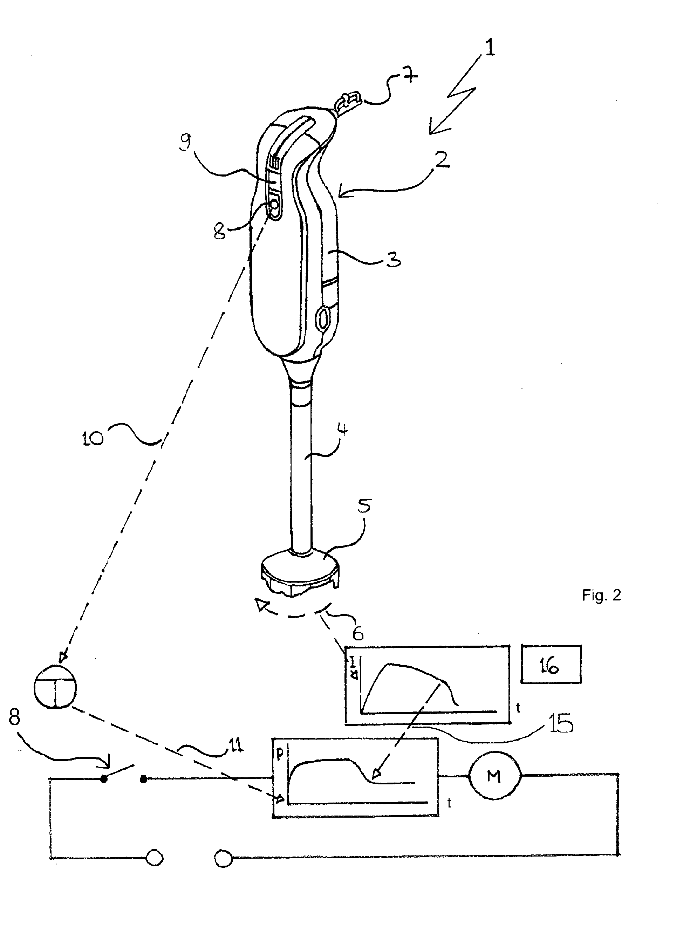

Ein alternatives Verfahren zum Betreiben des Haushaltsgeräts 1 wird in Fig. 2 gezeigt, wobei sich der grundsätzliche Aufbau des Stabmixers 2 von dem zuvor beschriebenen Ausführungsbeispiel nicht unterscheidet. Auch in diesem Fall wird die Leistung nach Betätigen des ersten Schaltmittels 8 (Ein/Aus-Schalter) vom Steuerungsmittel des Haushaltsgeräts 1 zunächst gegenüber der zulässigen Dauerlast erhöht eingestellt. Das Haushaltsgerät 1 ist jedoch mit einem Sensor ausgestattet, welcher zur Bestimmung der Stromaufnahme des elektromotorischen Antriebs geeignet ist (siehe Diagramm: Leistung P über Zeit t). In der Startphase ist die Stromaufnahme bei der Bearbeitung von sprödem und hartem Gut naturgemäß erhöht (siehe Diagramm: Strom I über Zeit t). Infolge des fortschreitenden Zerkleinerungsprozesses fällt die Stromaufnahme jedoch ab. Mit Erreichen eines vom Hersteller des Haushaltsgeräts vorgegebenen Schwellenwerts für die Stromaufnahme wird die Leistung zurückgenommen (Pfeil 15), bis der elektromotorische Antrieb M wieder im Bereich seiner zulässigen Dauerlast betrieben wird. Durch Betätigen des zweiten Schaltmittels 9 kann auch bei dieser Ausbildung vom Benutzer während des Bearbeitungsvorgangs eine erneute vorübergehende Leistungssteigerung angefordert werden.

Falls dem Sensor für die Stromaufnahme ein Zeitglied 16 zugeordnet ist, kann das Steuerungsmittel aus der erbrachten Leistung und der Zeit die verrichtete Arbeit bestimmen, die gleichfalls einen Einfluss auf den thermischen Zustand des elektromotorischen Antriebs M hat. In diesem Fall wird eine Leistungsreduzierung auf eine zulässige Dauerlast vorgenommen, sobald ein vom Hersteller des Haushaltsgeräts 1 vorgegebener Grenzwert für die Arbeit unter erhöhter Leistung erreicht ist.

Alternativ oder zusätzlich kann vorgesehen werden, dass der elektromotorische Antrieb mit einem Temperatursensor ausgestattet ist. In diesem Fall kann die im elektromotorischen Antrieb M gemessene Temperatur zum Umschalten auf eine zulässige Dauerlast oder zumindest zum Abschalten des elektromotorischen Antriebs M im Falle einer Überhitzung dienen.

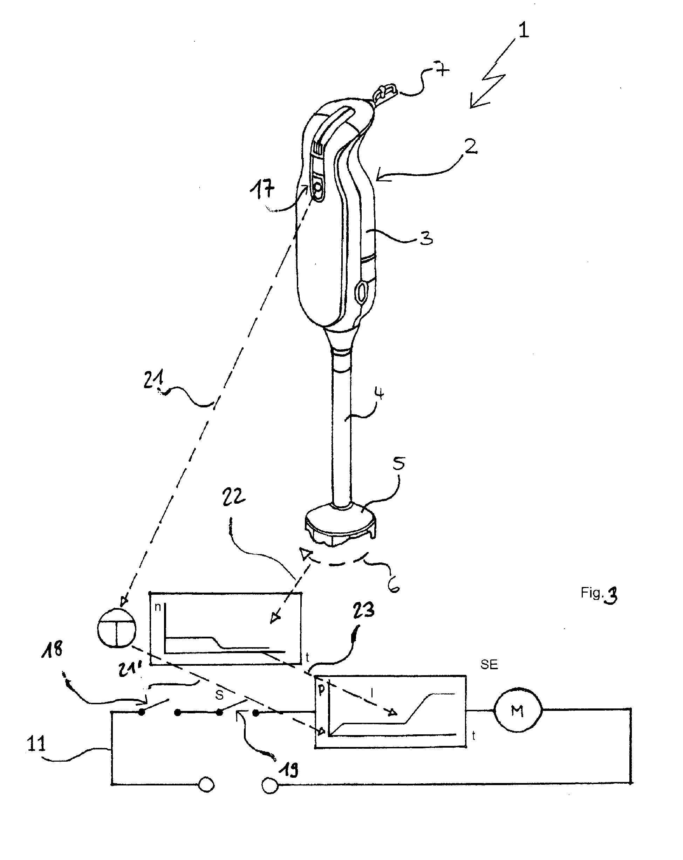

Bei dem in Fig. 3 dargestellten Haushaltsgerät 1 befindet sich im Handgriff 3 eine Sicherheits-Einschaltvorrichtung 17 mit einem ersten Schaltelement 18 und einem zweiten Schaltelement 19, die in Reihe in der Stromzuführung 20 zum elektromotorischen Antrieb M angeordnet sind. Die Schaltelemente 18, 19 können über Handhaben der Sicherheits-Einschaltvorrichtung 17, beispielsweise über Druckknöpfe, unabhängig voneinander betätigt werden.

Da das glockenartige Fußteil 5 das beispielsweise messerartige ausgebildete Werkzeug nur von oben und seitlich verdeckt, kann grundsätzlich nicht ausgeschlossen werden, dass der Benutzer des Haushaltsgeräts oder eine in der Nähe befindliche Person das Werkzeug berühren. Sofern sich das Werkzeug nicht in Bewegung befindet, ist dieser Kontakt in Regel unproblematisch. Nach dem Eintauchen des Werkzeugs in das Behandlungsgut stellt dieses ebenfalls keine Gefahrenquelle dar. Ein Kontakt mit einem außerhalb des Behandlungsguts frei unter voller Leistung rotierenden Werkzeug ist jedoch unbedingt zu vermeiden. Ferner kann ein unter voller Leistung drehendes Werkzeug nach dem Herausziehen aus dem Behandlungsgut, insbesondere falls dieses heiß ist, durch Erzeugung von Spritzern auch ohne direkten Kontakt mit dem Werkzeugs sicherheitskritisch sein.

Um das Haushaltsgerät 1 in Betrieb zu nehmen, sind zunächst das als einfacher Ein/AusSchalter (On/Off) vorgesehene Schaltelement 18 sowie das als zusätzliche Sicherheitstaste S dienende Schaltelement 19 gleichzeitig zu betätigen (Pfeil 21, 21'). Der elektromotorische Antrieb M des Haushaltsgeräts 1 geht aus der Startphase in eine Phase geringer Leistungsabgabe über (siehe Diagramm: Leistung P über Zeit t), in welcher das vor dem Eintauchen in das Behandlungsgut quasi widerstandsfrei drehende Werkzeug mit einer relativ hohen Drehzahl n rotiert (siehe Diagramm Drehzahl n über Zeit t). Wegen der geringen Leistungsabgabe des elektromotorischen Antriebs M in Verbindung mit der geringen Masse des Werkzeugs stellt dieses in diesem Zustand bei Berührung keine wesentliche Gefahrenquelle dar. Um das verbleibende Risiko für den Benutzer noch weiter abzusenken, wird dieser Betriebszustand durch ein akustisches und/oder optisches Signal (gegebenenfalls auch durch ein taktiles Signal, beispielsweise durch Vibrationen) dem Benutzer und seinem Umfeld mitgeteilt.

Mit dem Eintauchen des Werkzeugs in das Behandlungsgut fällt die den Belastungszustand des Werkzeugs kennzeichnende, über Sensoren gemessene Drehzahl n sprunghaft ab (Pfeil 22). Der berechnete Drehzahlgradient oder das Unterschreiten eines festgelegten Schwellenwerts (Grenzdrehzahl) veranlassen die Steuerungseinrichtung ("Smart Electronic (SE)") des Haushaltsgeräts 1 dazu (Pfeil 23), die Leistung des elektromotorischen Antriebs erheblich anzuheben, so dass eine Bearbeitung des Behandlungsguts ermöglicht wird. Beim Herausziehen des Werkzeugs 5 aus dem Behandlungsgut dient die nicht gezeigte sprunghafte Zunahme der Drehzahl n als Indiz für die Entlastung des Werkzeugs. Die Steuerung des Haushaltsgeräts 1 regelt die Leistung des elektromotorischen Antriebs M in diesem Fall wieder auf einen geringen Wert herunter.

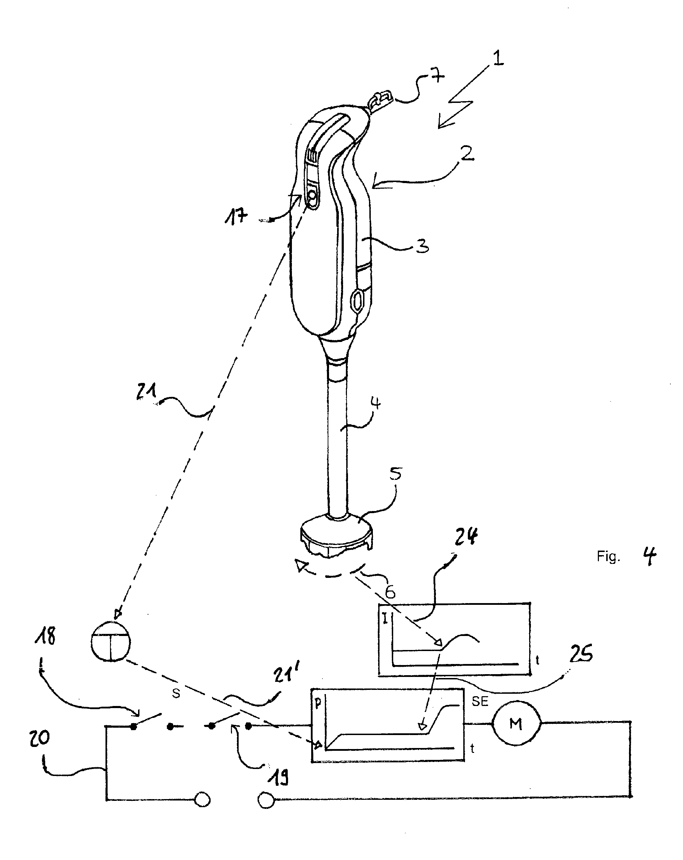

Ein weiteres Verfahren zum Betreiben des Haushaltsgeräts 1 wird in Fig. 4 gezeigt, wobei sich der grundsätzliche Aufbau des Stabmixers 2 von dem zuvor beschriebenen Ausführungsbeispiel nicht unterscheidet. Anstelle von Sensoren zur Bestimmung der Drehzahl n sind in diesem Fall jedoch Mittel zur Ermittlung der Stromaufnahme des elektromotorischen Antriebs M vorgesehen. Mit dem Eintauchen des Werkzeugs in das Behandlungsgut steigt der aufgenommene Strom I deutlich an (siehe Pfeil 24 zum Diagramm: Strom I über Zeit t). Der berechnete Gradient der Stromaufnahme oder das Überschreiten eines festgelegten Schwellenwerts (Grenzstromaufnahme) veranlassen die Steuerung des Haushaltsgeräts 1 dazu (Pfeil 25), die Leistung des elektromotorischen Antriebs M zu erhöhen, um ein ausreichendes Drehmoment für die Bearbeitung des Behandlungsguts bereit zu stellen. Die Mittel zur Bestimmung der Stromaufnahme können ferner dazu dienen, beim Überschreiten eines weiteren, höheren Grenzwerte (Überlaststrom) den elektromotorischen Antrieb M abzuschalten, um beispielsweise bei einem Blockieren des Werkzeugs Schäden am Haushaltsgerät 1 zu vermeiden.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichen

- 1: Haushaltsgerät
- 2: Stabmixer
- 3: Handgriff
- 4: Wellenschaft
- 5: Fußteil
- 6: Pfeil (Drehrichtung rotierendes Werkzeug)
- 7: Netzkabel
- 8: Schaltmittel (Ein/Aus-Schalter)
- 9: Schaltmittel
- 10: Pfeil (Wirkung des ersten Schaltmittels)
- 11: Pfeil (Wirkung des Einschaltvorgangs auf die Leistung)
- 12: Zeitglied
- 13: Pfeil (Wirkung des Einschaltvorgangs auf das Zeitglied)
- 14: Pfeil. (Wirkung des Zeitglieds auf die Leistung)
- 15: Pfeil (Wirkung der gemessenen Stromaufnahme auf die Leistung)
- 16: Zeitglied
- 17: Sicherheits-Einschaltvorrichtung
- 18: Schaltelement
- 19: Schaltelement
- 20: Stromzuführung
- 21, 21': Pfeil (Wirkung der betätigten Sicherheits-Einschaltvorrichtung)
- 22, 22': Pfeil (Wirkung des Bearbeitungswiderstands auf die Drehzahl n)
- 23: Pfeil (Steuerung der Leistung P in Abhängigkeit von der Drehzahl n)
- 24: Pfeil (Wirkung des Bearbeitungswiderstands auf den aufgenommenen Strom I)
- 25: Pfeil (Steuerung der Leistung P in Abhängigkeit vom aufgenommenen Strom I)
- I: Strom
- M: elektromotorischer Antrieb
- n: Drehzahl
- P: Leistung
- S: Sicherheitstaste
- t: Zeit

## Patentansprüche

1. Haushaltsgerät (1) mit mindestens einem rotatorisch und/oder translatorisch bewegbaren Werkzeug und einem elektromotorischen Antrieb (M), **dadurch gekennzeichnet, dass** das Haushaltsgerät (1) Steuerungsmittel zum vorübergehenden Betreiben des elektromotorischen Antriebs (M) mit einer gegenüber der zulässigen Dauerlast erhöhten Leistung aufweist.

2. Haushaltsgerät nach Anspruch 1, **dadurch gekennzeichnet, dass** die erhöhte Leistung in der Anlaufphase des elektrischen Antriebs (M) erzeugbar ist.

3. Haushaltsgerät nach Anspruch 2, **dadurch gekennzeichnet, dass** die Steuerungsmittel zum vorübergehenden Betreiben des elektromotorischen Antriebs (M) in einer gegenüber der zulässigen Dauerlast erhöhten Leistung durch Einschalten des Haushaltsgeräts (1) aktivierbar sind.

4. Haushaltsgerät nach einem der vorhergehenden Ansprüche, **dadurch gekennzeichnet, dass** die Steuerungsmittel zum vorübergehenden Betreiben des elektromotorischen Antriebs (M) in einer gegenüber der zulässigen Dauerlast erhöhten Leistung durch Betätigen eines Schaltmittels (9) des Haushaltsgeräts (1) während des Betriebs aktivierbar sind.

5. Haushaltsgerät nach einem der vorhergehenden Ansprüche, **dadurch gekennzeichnet, dass** das Haushaltsgerät (1) ein mit dem Steuerungsmittel wirkverbundenes Zeitglied (12) aufweist, durch welches das Betreiben des elektromotorischen Antriebs (M) in einer gegenüber der zulässigen Dauerlast erhöhten Leistung zeitlich begrenzbar ist.

6. Haushaltsgerät nach einem der Ansprüche 1 bis 4, **dadurch gekennzeichnet, dass** das Haushaltsgerät (1) ein mit dem Steuerungsmittel wirkverbundenes Mittel zur Messung der verrichteten Arbeit und/oder des Stroms aufweist, durch welches das Betreiben des elektromotorischen Antriebs (M) in einer gegenüber der zulässigen Dauerlast erhöhten Leistung in Abhängigkeit von der verrichteten Arbeit und/oder einem Abfall des Stroms begrenzbar ist.

7. Haushaltsgerät nach einem der vorhergehenden Ansprüche, **dadurch gekennzeichnet, dass** Mittel zur Abgabe eines akustischen Signals in Abhängigkeit vom Leistungszustand des elektromotorischen Antriebs (M) vorgesehen sind.

8. Haushaltsgerät nach einem der vorhergehenden Ansprüche, **dadurch gekennzeichnet, dass** Mittel zur Abgabe eines optischen Signals in Abhängigkeit vom Leistungszustand des elektromotorischen Antriebs (M) vorgesehen sind.

9. Verfahren zum Betreiben eines Haushaltsgeräts mit mindestens einem elektromotorisch antreibbaren Werkzeug, **dadurch gekennzeichnet, dass** der elektromotorische Antriebs (M) bei Auftreten eines vorgegebenen Ereignisses vorübergehend auf eine gegenüber der zulässigen Dauerlast erhöhte Leistung umgeschaltet wird.

10. Verfahren nach Anspruch 9, **dadurch gekennzeichnet, dass** das vorgegebene Ereignis das Einschalten des Geräts ist.

11. Verfahren nach Anspruch 9, **dadurch gekennzeichnet, dass** das vorgegebene Ereignis das Betätigen eines Schaltmittels (8, 9) des Haushaltsgeräts (1) ist.

12. Verfahren nach einem der Ansprüche 9 bis 11, **dadurch gekennzeichnet, dass** die Zeitdauer des Betreibens mit einer gegenüber der zulässigen Dauerlast erhöhten Leistung gemessen und der elektromotorische Antrieb (M) bei Erreichen einer vorgegebenen Zeitgrenze auf die zulässige Dauerlast umgeschaltet wird.

13. Verfahren nach einem der Ansprüche 9 bis 11, **dadurch gekennzeichnet, dass** die während des Betreibens mit einer gegenüber der zulässigen Dauerlast erhöhten Leistung verrichtete Arbeit und/oder der Strom gemessen und der elektromotorische Antrieb (M) bei Erreichen einer vorgegebenen Arbeits- und/oder Leistungsgrenze auf die zulässige Dauerlast umgeschaltet wird.

14. Verfahren nach einem der Ansprüche 9 bis 13, **dadurch gekennzeichnet, dass** das Betreiben mit einer gegenüber der zulässigen Dauerlast erhöhten Leistung durch ein akustisches Signal angezeigt wird.

15. Verfahren nach einem der Ansprüche 9 bis 14, **dadurch gekennzeichnet, dass** das Betreiben mit einer gegenüber der zulässigen Dauerlast erhöhten Leistung durch ein optisches Signal angezeigt wird.

16. Haushaltsgerät (1) nach einem der vorhergehenden Ansprüche 1 bis 8, **dadurch gekennzeichnet dass** das Haushaltsgerät (1) Mittel zur Erfassung des Belastungszustands des Werkzeugs sowie eine Steuerungseinrichtung aufweist, die zur Veränderung der Leistung des elektromotorischen Antriebs (M) in Abhängigkeit vom gemessenen Belastungszustand geeignet ist, wobei das Haushaltsgerät (1) mit einer Sicherheits-Einschaltvorrichtung (8) aus mindestens zwei Schaltelementen (18, 19) ausgestattet ist, die zum Einschalten des Haushaltsgeräts (1) in eine Einschaltposition zu verstellen sind.

17. Haushaltsgerät nach Anspruch 16, **dadurch gekennzeichnet, dass** die Mittel zur Erfassung des Belastungszustand des Werkzeugs zur Bestimmung der Drehzahl (n) des Werkzeugs vorgesehen sind.

18. Haushaltsgerät nach Anspruch 16, **dadurch gekennzeichnet, dass** die Mittel zur Erfassung des Belastungszustand des Werkzeugs zur Bestimmung der Stromaufnahme (Strom I) des elektromotorischen Antriebs (M) vorgesehen sind.

19. Haushaltsgerät nach einem der Ansprüche 16 bis 18, **dadurch gekennzeichnet, dass** die Schaltelemente (18, 19) elektrisch mit dem elektromotorischen Antrieb (M) wirkverbunden sind.

20. Haushaltsgerät nach einem der Ansprüche 16 bis 18 , **dadurch gekennzeichnet, dass** die Schaltelemente (18, 19) miteinander mechanisch und mindestens ein Schaltelement (10) mit dem elektromotorischen Antrieb (M) elektrisch wirkverbunden sind.

21. Haushaltsgerät nach einem der Ansprüche 16 bis 20, **dadurch gekennzeichnet, dass** Mittel zur Abgabe eines akustischen Signals in Abhängigkeit vom Belastungszustand des Werkzeugs vorgesehen sind.

22. Haushaltsgerät nach einem der Ansprüche 16 bis 21, **dadurch gekennzeichnet, dass** Mittel zur Abgabe eines optischen Signals in Abhängigkeit vom Belastungszustand des Werkzeugs vorgesehen sind.

## Claims

1. Domestic appliance (1) having at least one tool which can be moved in a rotatory and/or translatory manner and an electric motor drive (M), **characterised in that** the domestic appliance (1) has control means for temporarily operating the electric motor drive (M) at an increased power in relation to the permissible continuous load.

2. Domestic appliance according to claim 1, **characterised in that** the increased power can be generated during the start-up phase of the electrical drive (M).

3. Domestic appliance according to claim 2, **characterised in that** the control means for temporarily operating the electric motor drive (M) at an increased power in relation to the permissible continuous load can be activated by switching on the domestic appliance (1).

4. Domestic appliance according to one of the preceding claims, **characterised in that** the control means for temporarily operating the electric motor drive (M) at an increased power in relation to the permissible continuous load can be activated by actuating a switching means (9) of the domestic appliance (1) during operation.

5. Domestic appliance according to one of the preceding claims, **characterised in that** the domestic appliance (1) has a timing element (12) actively connected to the control means, by means of which timing element (12) the operation of the electric motor drive (M) at an increased power in relation to the permissible continuous load can be temporally limited.

6. Domestic appliance according to one of claims 1 to 4, **characterised in that** the domestic appliance (1) has a means actively connected to the control means for measuring the work performed and/or the current, by means of which the operation of the electric motor drive (M) at an increased power in relation to the permissible continuous load can be limited as a function of the work performed and/or a drop in the current.

7. Domestic appliance according to one of the preceding claims, **characterised in that** means for emitting an acoustic signal as a function of the power state of the electric motor drive (M) are provided.

8. Domestic appliance according to one of the preceding claims, **characterised in that** means for emitting an optical signal as a function of the power state of the electric motor drive (M) are provided.

9. Method for the operation of a domestic appliance having at least one tool which can be driven by an electric motor, **characterised in that** the electric motor drive (M) is temporarily switched to an increased power in relation to the permissible continuous load when a predefined event occurs.

10. Method according to claim 9, **characterised in that** the predefined event is the switching on of the appliance.

11. Method according to claim 9, **characterised in that** the predefined event is the actuation of a switching means (8, 9) of the domestic appliance (1).

12. Method according to one of claims 9 to 11, **characterised in that** the duration of the operation at an increased power in relation to the permissible continuous load is measured and the electric motor drive (M) is switched to the permissible continuous load once a predefined time limit has been reached.

13. Method according to one of claims 9 to 11, **characterised in that** the work performed during the operation at an increased power in relation to the permissible continuous load and/or the current is measured and the electric motor drive (M) is switched to the permissible continuous load once a predefined work and/or power limit has been reached.

14. Method according to one of claims 9 to 13, **characterised in that** the operation at an increased power in relation to the permissible continuous load is indicated by an acoustic signal.

15. Method according to one of claims 9 to 14, **characterised in that** the operation at an increased power in relation to the permissible continuous load is indicated by an optical signal.

16. Domestic appliance (1) according to one of the preceding claims 1 to 8, **characterised in that** the domestic appliance (1) has means for detecting the load state of the tool and a control facility suitable for modifying the power of the electric motor drive (M) as a function of the measured load state, wherein the domestic appliance (1) is equipped with a safety switching-on device (8) comprising at least two switching elements (18, 19) which are to be moved into a switch-on position in order to switch on the domestic appliance (1).

17. Domestic appliance according to claim 16, **characterised in that** the means for detecting the load state of the tool is provided for determining the speed (n) of the tool.

18. Domestic appliance according to claim 16, **characterised in that** the means for detecting the load state of the tool is provided for determining the current consumption (current I) of the electric motor drive (M).

19. Domestic appliance according to one of claims 16 to 18, **characterised in that** the switching elements (18, 19) have an active electrical connection to the electric motor drive (M).

20. Domestic appliance according to one of claims 16 to 18, **characterised in that** the switching elements (18, 19) have an active mechanical connection to one another and at least one switching element (10) has an active electrical connection to the electric motor drive (M).

21. Domestic appliance according to one of claims 16 to 20, **characterised in that** means for emitting an acoustic signal as a function of the load state of the tool are provided.

22. Domestic appliance according to one of claims 16 to 21, **characterised in that** means for emitting an optical signal as a function of the load state of the tool are provided.

## Revendications

1. Appareil électroménager (1) comprenant au moins un outil mobile par rotation et/ou par translation et un entraînement électromotorisé (M), **caractérisé en ce que** l'appareil électroménager (1) présente des moyens de commande servant au fonctionnement intermittent de l'entraînement électromotorisé (M), à une puissance augmentée par rapport à la charge continue admissible.

2. Appareil électroménager selon la revendication 1, **caractérisé en ce que** la puissance augmentée peut être produite au cours de la phase de démarrage de l'entraînement électromotorisé (M).

3. Appareil électroménager selon la revendication 2, **caractérisé en ce que** les moyens de commande servant au fonctionnement intermittent de l'entraînement électromotorisé (M), à une puissance augmentée par rapport à la charge continue admissible, peuvent être activés par la mise en marche de l'appareil électroménager (1).

4. Appareil électroménager selon l'une quelconque des revendications précédentes; **caractérisé en ce que** les moyens de commande servant au fonctionnement intermittent de l'entraînement électromotorisé (M), à une puissance augmentée par rapport à la charge continue admissible, peuvent être activés, au cours du fonctionnement, en actionnant un moyen de commutation (9) de l'appareil électroménager (1).

5. Appareil électroménager selon l'une quelconque des revendications précédentes, **caractérisé en ce que** l'appareil électroménager (1) présente un relais de temporisation (12) fonctionnellement relié au moyen de commande, relais de temporisation par lequel le fonctionnement de l'entraînement électromotorisé (M), à une puissance augmentée par rapport à la charge continue admissible, peut être limité dans le temps.

6. Appareil électroménager selon l'une quelconque des revendications 1 à 4, **caractérisé en ce que** l'appareil électroménager (1) présente un moyen fonctionnellement relié au moyen de commande, pour mesurer le travail effectué et/ou le courant, moyen par lequel le fonctionnement de l'entraînement électromotorisé (M), à une puissance augmentée par rapport à la charge continue admissible, peut être limité en fonction du travail effectué et/ou d'une chute de courant.

7. Appareil électroménager selon l'une quelconque des revendications précédentes, **caractérisé en ce qu'**il est prévu des moyens pour fournir un signal sonore en fonction de l'état de puissance de l'entraînement électromotorisé (M).

8. Appareil électroménager selon l'une quelconque des revendications précédentes, **caractérisé en ce qu'**il est prévu des moyens pour fournir un signal optique en fonction de l'état de puissance de l'entraînement électromotorisé (M).

9. Procédé de fonctionnement d'un appareil électroménager ayant au moins un outil pouvant être entraîné de manière électromotorisée, **caractérisé en ce que** l'entraînement électromotorisé (M), quand il se produit un évènement prédéfini, passe temporairement en mode de fonctionnement à puissance augmentée par rapport à la charge continue admissible.

10. Procédé selon la revendication 9, **caractérisé en ce que** l'évènement prédéfini est la mise en marche de l'appareil.

11. Procédé selon la revendication 9, **caractérisé en ce que** l'évènement prédéfini est l'actionnement d'un moyen de commutation (8, 9) de l'appareil électroménager (1).

12. Procédé selon l'une quelconque des revendications 9 à 11, **caractérisé en ce que** la durée du fonctionnement à une puissance augmentée par rapport à la charge continue admissible est mesurée, et l'entraînement électromotorisé (M), quand une limite de temps prédéfinie est atteinte, passe en mode de fonctionnement à charge continue admissible.

13. Procédé selon l'une quelconque des revendications 9 à 11, **caractérisé en ce que** le travail effectué et/ou le courant, pendant le fonctionnement à une puissance augmentée par rapport à la charge continue admissible, est mesuré, et l'entraînement électromotorisé (M), quand une limite de travail et/ou de puissance prédéfinie est atteinte, passe en mode de fonctionnement à charge continue admissible.

14. Procédé selon l'une quelconque des revendications 9 à 13, **caractérisé en ce que** le fonctionnement à une puissance augmentée par rapport à la charge continue admissible est indiqué par un signal sonore.

15. Procédé selon l'une quelconque des revendications 9 à 14, **caractérisé en ce que** le fonctionnement à une puissance augmentée par rapport à la charge continue admissible est indiqué par un signal optique.

16. Appareil électroménager (1) selon l'une quelconque des revendications 1 à 8, **caractérisé en ce que** l'appareil électroménager (1) présente des moyens servant à la détection de l'état de charge de l'outil, ainsi qu'un dispositif de commande qui est approprié pour la modification de la puissance de l'entraînement électromotorisé (M), en fonction de l'état de charge mesuré, dans lequel l'appareil électroménager (1) est équipé d'un dispositif de mise en marche de sûreté (8) se composant d'au moins deux éléments de commutation (18, 19) qui sont à placer sur une position de démarrage pour la mise en marche de l'appareil électroménager (1).

17. Appareil électroménager selon la revendication 16, **caractérisé en ce que** les moyens sont prévus pour la détection de l'état de charge de l'outil, afin de déterminer la vitesse de rotation (n) de l'outil.

18. Appareil électroménager selon la revendication 16, **caractérisé en ce que** les moyens sont prévus pour la détection de l'état de charge de l'outil, afin de déterminer la consommation de courant (courant I) de l'entraînement électromotorisé (M).

19. Appareil électroménager selon l'une quelconque des revendications 16 à 18, **caractérisé en ce que** les éléments de commutation (18, 19) sont fonctionnellement reliés, électriquement, à l'entraînement électromotorisé (M).

20. Appareil électroménager selon l'une quelconque des revendications 16 à 18, **caractérisé en ce que** les éléments de commutation (18, 19) sont fonctionnellement reliés mécaniquement l'un à l'autre, et au moins un élément de commutation (10) est fonctionnellement relié, électriquement, à l'entraînement électromotorisé (M).

21. Appareil électroménager selon l'une quelconque des revendications 16 à 20, **caractérisé en ce qu'**il est prévu des moyens pour fournir un signal sonore en fonction de l'état de charge de l'outil.

22. Appareil électroménager selon l'une quelconque des revendications 16 à 21, **caractérisé en ce qu'**il est prévu des moyens pour fournir un signal optique en fonction de l'état de charge de l'outil.
